# EUROPEAN PATENT APPLICATION

(11) **EP 4 187 629 A1**
(43) Date of publication of application: **31.05.2023**
(21) Application number: 21845708.3
(22) Date of filing: 19.07.2021
(51) Int. Cl.: H01M 4/04, H01M 10/058, H01M 10/0525

(54) **ELECTRODE SHEET SLOTTING METHOD AND DEVICE**

(30) Priority: 23.07.2020 CN 202010720961
(71) Applicant: BYD Company Limited, Shenzhen, Guangdong 518118 (CN)
(72) Inventor: JIANG, Xinjun, Shenzhen, Guangdong 518118 (CN); TANG, Xiaobo, Shenzhen, Guangdong 518118 (CN); ZHANG, Xiaoyong, Shenzhen, Guangdong 518118 (CN); ZHANG, Jian, Shenzhen, Guangdong 518118 (CN); WANG, Jianjun, Shenzhen, Guangdong 518118 (CN)
(74) Representative: Arnold & Siedsma
(86) International application number: PCT/CN2021/107068
(87) International publication number: WO 2022/017315

(57) **Abstract**

The present disclosure discloses a method and device for forming a groove on an electrode plate. The method for forming a groove on an electrode plate includes: thinning an active material layer by a laser method, where the active material layer is located in a to-be-grooved area of the electrode plate; and removing the thinned active material layer by a physical removal method to form an accommodating groove that exposes the current collector layer. By adopting a combination of the laser method and the physical removal method, the present disclosure, the present disclosure, on the one hand, can quickly remove the active material layer in the to-be-grooved area, and on the other hand, can avoid damaging the current collector layer. This ensures the processing precision, speeds up the production and improves the product yield.

## Description

### CROSS REFERENCE TO RELATED APPLICATION

The present disclosure claims priority to and benefits of Chinese Patent Application No. 202010720961.5, filed on July 23, 2020. The entire content of the above-referenced application is incorporated herein by reference.

### FIELD

The present disclosure relates to the technical field of batteries, and specifically to a method and device for forming a groove on an electrode plate.

### BACKGROUND

Forming a groove for accommodating a tab on an electrode plate is an important step in the preparation of lithium-ion batteries. The tab is a metal conductor that leads out positive and negative electrodes from the battery core. Therefore, the groove for accommodating the tab is necessary.

At present, a method for forming a groove is to fill a foaming adhesive at a position where the groove is to be provided during the preparation of an electrode plate, and remove the foaming adhesive after the electrode plate is prepared, to form a groove at the position where the foaming adhesive is retained. However, the above method requires the use of the foaming adhesive, which is expensive as a consumable. In addition, the tolerance of the groove formed by the foaming adhesive is relatively large.

### SUMMARY

An objective of the present disclosure is to provide a method and device for forming a groove on an electrode plate, in which an active material on a surface of the electrode plate is removed by laser at a position where the groove is to be provided, so that a very thin layer of active material is left; and then, the residual thin layer of active material is removed by a physical method to form a groove for accommodating a tab. No consumable needs to be used to form the groove, so the costs are reduced. The method for forming a groove by the laser method is of high precision.

A first aspect of the present disclosure provides a method for forming a groove on an electrode plate. The electrode plate includes a current collector layer and an active material layer attached on the current collector layer. The method for forming a groove on an electrode plate includes: thinning the active material layer located in a to-be-grooved area of the electrode plate by a laser method; and removing the thinned active material layer by a physical removal method to form an accommodating groove that exposes the current collector layer.

In the method for forming a groove on an electrode plate, the removing the thinned active material layer by a physical removal method includes: removing the thinned active material layer by any one of a brushing method, a scraping method, a wiping method or a sticking method.

In the method for forming a groove on an electrode plate, the removing the thinned active material layer by a physical removal method includes: performing a first removal on the thinned active material layer by any one of a brushing method, a scraping method, or a wiping method; and performing a second removal on the thinned active material layer by a sticking method.

In the method for forming a groove on an electrode plate, after the thinning the active material layer, a value range of a thickness H of the active material layer is: 30 µm ≥ H ≥ 1 µm.

In the method for forming a groove on an electrode plate, before the thinning the active material layer by a laser method, the method further includes: moving the electrode plate, to move the active material layer to a thinning processing position; and after the thinning the active material layer by a laser method, and before the removing the thinned active material layer by a physical removal method, the method for forming a groove on an electrode plate further includes: moving the electrode plate, to move the active material layer from the thinning processing position to a removal position.

A second aspect of the present disclosure provides a device for forming a groove on an electrode plate, including a laser emitter and a removal tool, where the laser emitter is configured for: thinning an active material layer located in a to-be-grooved area of the electrode plate by a laser method; and the removal tool is configured for: removing the thinned active material layer by a physical removal method to form an accommodating groove that exposes the current collector layer.

In the device for forming a groove on an electrode plate, the removal tool includes any one of a brush, a dust-free cloth, a scraper or an adhesive tape; and the brush, the dust-free cloth, the scraper or the adhesive tape are respectively configured for: removing the thinned active material layer by a brushing method, a scraping method, a wiping method or a sticking method.

In the device for forming a groove on an electrode plate, the removal tool includes any one of a brush, a dust-free cloth, a scraper or an adhesive tape; and the brush, the dust-free cloth, or the scraper are respectively configured for: performing a first removal on the thinned active material layer by a brushing method, a scraping method, or a wiping method; and the adhesive tape is configured for: performing a second removal on the thinned active material layer by a sticking method.

In the device for forming a groove on an electrode plate, after the thinning the active material layer, a value range of a thickness H of the active material layer is: 30 µm ≥ H ≥ 1 µm.

The device for forming a groove on an electrode plate further includes: a conveyor belt, where the conveyor belt is configured for: moving the electrode plate, to move the active material layer to a thinning processing position; and to move the active material layer from the thinning processing position to a removal position.

By adopting a combination of the laser method and the physical removal method, the present disclosure, on the one hand, can quickly remove the active material layer in the to-be-grooved area, and on the other hand, can avoid damaging the current collector layer. This improves the processing precision, speeds up the production and improves the product yield.

### BRIEF DESCRIPTION OF THE DRAWINGS

To describe the technical solutions of the present disclosure more clearly, the following briefly introduces the accompanying drawings required in the detailed description of embodiments.
FIG. 1 is a flowchart of the method for forming a groove on an electrode plate according to an embodiment of the present disclosure;
FIG. 2 is a flowchart of the method for forming a groove on an electrode plate according to an embodiment of the present disclosure;
FIG. 3 is a front view of the device for forming a groove on an electrode plate according to an embodiment of the present disclosure; and

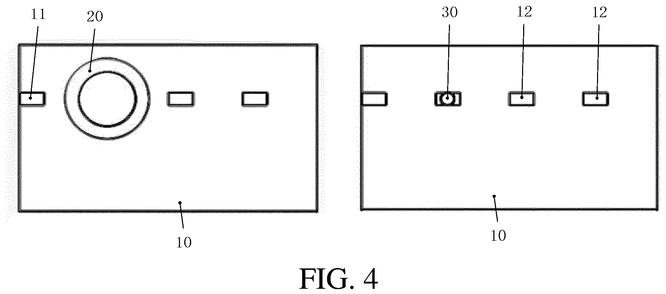

FIG. 4 is a top view of the device for forming a groove on an electrode plate according to an embodiment of the present disclosure.

### List of reference numerals:

10 - electrode plate, 11 - to-be-grooved area, 12 - accommodating groove, 20 - laser emitter, 30 - brush.

### DETAILED DESCRIPTION

The technical solutions in the embodiments of the present disclosure will be described clearly and fully with reference to the accompanying drawings in the embodiments of the present disclosure.

As a core device of a lithium-ion battery, an electrode plate is generally manufactured by a following process: preparing an active material slurry by mixing an active material, a binder and a conductive agent, and then coating the slurry on two sides of a copper or aluminum current collector. After the active material slurry on the two sides of the current collector is dried, the dried active material slurry is generally referred to as an active material layer. As a device for leading out positive and negative electrodes from the battery core, a tab needs to contact with the current collector. Therefore, it is necessary to remove the active material layer at the position where the tab is to be connected on the electrode plate, and then expose the current collector layer, so as to facilitate the arrangement of the tab and the contact of the tab with the current collector. Based on the above contents, the technical solutions of the present disclosure are described in detail.

### First embodiment

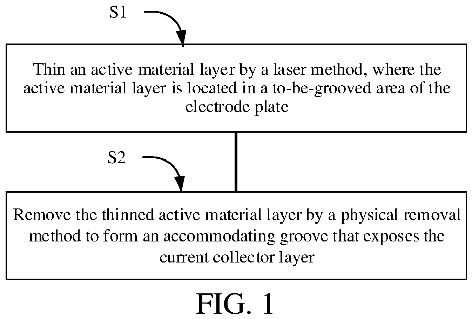

Referring to FIG. 1, the method for forming a groove on an electrode plate according to a first embodiment of the present disclosure includes the following steps.

In step S1, an active material layer is thinned by a laser method, where the active material layer is located in a to-be-grooved area of the electrode plate. After the active material layer is thinned, a value range of a thickness H of the active material layer is: 30 µm ≥ H ≥ 1 µm.

In step S2, the thinned active material layer is removed by a physical removal method to form an accommodating groove that exposes the current collector layer. The obtained accommodating groove may be used for accommodating a tab, and the tab is welded and fixed to the exposed current collector layer.

In the present disclosure, the active material layer in the to-be-grooved area of the electrode plate is first thinned by the laser method, and then the thinned active material layer is removed. In other words, in the present disclosure, the groove formation process is divided into two steps, where the first step is thinning, and the second step is removal. The laser method used for thinning can quickly and precisely thin the active material layer, i.e., ensure the processing precision. As heat is generated during use of the laser method, the use of the laser method only for thinning can avoid the oxidation of the current collector layer caused by heat, thereby improving the product yield.

After the thinning by the laser method, a very thin active material layer is left, which can protect the current collector layer and prevent the current collector layer from being oxidized under heat. In addition, the remaining very thin active material layer may be removed by the physical removal method. Because the remaining active material layer is already very thin, the remaining active material layer can be quickly removed by the physical removal method. The physical removal method is relatively mild and does not damage the current collector layer.

Based on the above, by adopting a combination of the laser method and the physical removal method, the present disclosure, on the one hand, can quickly remove the active material layer in the to-be-grooved area, and on the other hand, can avoid damaging the current collector layer. This improves the processing precision, speeds up the production and improves the product yield.

Further, the removing the thinned active material layer by a physical removal method may specifically be implemented in two manners.

In a first manner, the thinned active material layer is removed by any one of a brushing method, a scraping method, a wiping method or a sticking method. To be specific, the brushing method is to use a brush to brush off the thinned active material layer. The scraping method is to use a scraper to scrape off the thinned active material layer. The wiping method is to use a dust-free cloth to adsorb and wipe off the thinned active material layer. The sticking method is to use an adhesive tape to remove the thinned active material layer by sticking. The thinned active material layer is removed at a time to further speed up the production. In addition, no matter which of the above physical removal methods is used, the thinned active material layer can be removed gently and quickly without damaging the current collector layer.

In a second manner, a first removal is performed on the thinned active material layer by any one of a brushing method, a scraping method, or a wiping method; and after the first removal is performed on the thinned active material layer, a second removal is performed on the thinned active material layer by a sticking method.

To be specific, in the first removal, the brushing method is to use a brush to brush off the thinned active material layer. The scraping method is to use a scraper to scrape off the thinned active material layer. The wiping method is to use a dust-free cloth to adsorb and wipe off the thinned active material layer. In the second removal, the sticking method is to use an adhesive tape to remove the thinned active material layer by sticking.

In other words, in the second manner, after the first removal, it is necessary to perform a further removal using an adhesive tape, so that the residual active material layer can be completely removed, to prevent the residual active material layer from affecting the welding of the tab and ensure the product yield. The adhesive tape can adhere particles of the active material layer left by the brush, the scraper or the dust-free cloth to the adhesive surface of the adhesive tape, so as to completely remove the active material layer.

In addition, as mentioned above, after the active material layer is thinned, a value range of a thickness H of the active material layer is: 30 µm ≥ H ≥ 1 µm. That is to say, after the thinning, the active material layer has become very thin, and its thickness can be controlled to be basically within a range of 1 µm to 30 µm. In this case, the physical removal method can easily remove the active material layer, which reduces the removal difficulty and increases the removal speed, thereby speeding up the production.

### Second embodiment

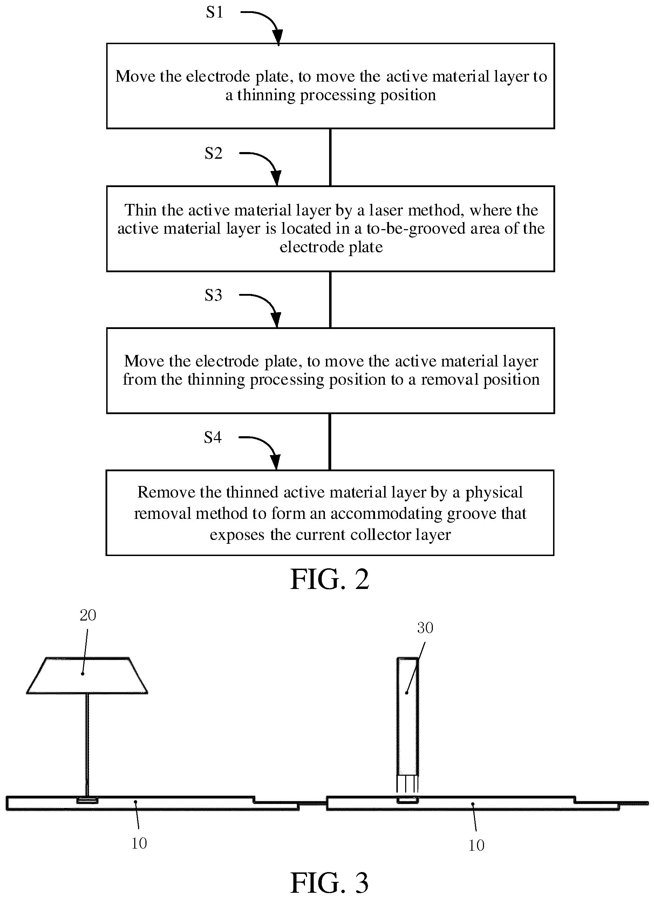

Referring to FIG. 2, a method for forming a groove on an electrode plate according to a second embodiment of the present disclosure includes the following steps.

In step S1, the electrode plate is moved, to move the active material layer to a thinning processing position.

In step S2, the active material layer located in a to-be-grooved area of the electrode plate is thinned by a laser method.

In step S3, the electrode plate is moved, to move the active material layer from the thinning processing position to a removal position.

In step S4, the thinned active material layer is removed by a physical removal method to form an accommodating groove that exposes the current collector layer.

Steps S2 and S4 are the same as steps S1 and S2 in the first embodiment, so the details will not be repeated herein.

Steps S1 and S3 may be performed using a conveyor belt. To be specific, the electrode plate to be grooved is placed on the conveyor belt, and then the conveyor belt is turned on to start conveying the electrode plate until the to-be-grooved area of the electrode plate moves to the thinning processing position. At the thinning processing position, the active material layer in the to-be-grooved area is thinned using a laser emitter.

After the thinning is completed, the conveyor belt continues to convey the electrode plate until the thinned active material layer moves to the removal position, at which the active material layer may be removed by using the removal tool.

It can be seen from the above that the arrangement of the automated movement process can further speed up the production and save production hours.

### Third embodiment

Referring to FIG. 3, a device for forming a groove on an electrode plate 10 according to an embodiment of the present disclosure includes a laser emitter 20 and a removal tool.

The laser emitter 20 is configured for: thinning an active material layer located in a to-be-grooved area 11 of the electrode plate 10 by a laser method. After the active material layer is thinned, a value range of a thickness H of the active material layer is: 30 µm ≥ H ≥ 1 µm.

The removal tool is configured for: removing the thinned active material layer by a physical removal method to form an accommodating groove 12 that exposes the current collector layer.

In this embodiment, the active material layer in the to-be-grooved area 11 of the electrode plate 10 is removed by using the laser emitter 20 in combination with the removal tool. First, the active material layer is thinned using the laser emitter 20, and then the thinned active material layer is removed using the removal tool. On the one hand, this can prevent the current collector layer from being oxidized under heat generated by the laser emitter 20. On the other hand, this can accelerate the removal of the active material layer and speed up the production.

Further, the removal tool may remove the thinned active material layer in two manners. Specifically, the removal tool may be any one of a brush 30, a dust-free cloth, a scraper or an adhesive tape.

In a first manner,
the thinned active material layer is removed by a brushing method using the brush 30. Alternatively, the thinned active material layer is removed by a wiping method using the dust-free cloth. Alternatively, the thinned active material layer is removed by a scraping method using the scraper. Alternatively, the thinned active material layer is removed by a sticking method using the adhesive tape. By removing the thinned active material layer at a time, the production can further be sped up.

In a second manner,
the thinned active material layer is removed by two operations.

First removal: The thinned active material layer is removed by the brushing method using the brush 30. Alternatively, the thinned active material layer is removed by the wiping method using the dust-free cloth. Alternatively, the thinned active material layer is removed by the scraping method using the scraper.

Second removal: After the first removal is performed on the thinned active material layer, the thinned active material layer is removed by the sticking method using the adhesive tape.

In the second manner, after the first removal, it is necessary to perform a further removal using an adhesive tape, so that the residual active material layer can be completely removed, to prevent the residual active material layer from affecting the welding of the tab and ensure the product yield. The adhesive tape can adhere particles of the active material layer left by the brush 30, the scraper or the dust-free cloth to the adhesive surface of the adhesive tape, so as to completely remove the active material layer.

Further, the device for forming a groove on an electrode plate 10 further includes a conveyor belt. The conveyor belt is configured for: conveying the electrode plate 10, to move the active material layer to a thinning processing position; and to move the active material layer from the thinning processing position to a removal position. The conveyor belt can realize the automated movement of the electrode plate 10, thereby further speeding up the production.

The embodiments of the present disclosure are described above in detail. Although the principles and implementations of the present disclosure are described by using specific examples in this specification, the descriptions of the foregoing embodiments are merely intended to help understand the method and the core idea of the method of the present disclosure.

## Claims

1. A method for forming a groove on an electrode plate, wherein the electrode plate comprises a current collector layer and an active material layer attached on the current collector layer, the method for forming a groove on an electrode plate comprising:
thinning the active material layer located in a to-be-grooved area of the electrode plate by a laser method; and
removing the thinned active material layer by a physical removal method to form an accommodating groove that exposes the current collector layer.

2. The method for forming a groove on an electrode plate according to claim 1, wherein the removing the thinned active material layer by a physical removal method comprises:
removing the thinned active material layer by any one of a brushing method, a scraping method, a wiping method or a sticking method.

3. The method for forming a groove on an electrode plate according to any one of claims 1 to 2, wherein the removing the thinned active material layer by a physical removal method comprises:
performing a first removal on the thinned active material layer by any one of a brushing method, a scraping method, or a wiping method; and
performing a second removal on the thinned active material layer by a sticking method.

4. The method for forming a groove on an electrode plate according to any one of claims 1 to 3, wherein after the thinning the active material layer, a value range of a thickness H of the active material layer is: 30 µm ≥ H ≥ 1 µm.

5. The method for forming a groove on an electrode plate according to any one of claims 1 to 3, wherein before the thinning the active material layer by a laser method, the method for forming a groove on an electrode plate further comprises:
moving the electrode plate, to move the active material layer to a thinning processing position; and
after the thinning the active material layer by a laser method, and before the removing the thinned active material layer by a physical removal method, the method for forming a groove on an electrode plate further comprises:
moving the electrode plate, to move the active material layer from the thinning processing position to a removal position.

6. A device for forming a groove on an electrode plate, comprising a laser emitter and a removal tool, wherein
the laser emitter is configured for: thinning an active material layer located in a to-be-grooved area of the electrode plate by a laser method; and
the removal tool is configured for: removing the thinned active material layer by a physical removal method to form an accommodating groove that exposes the current collector layer.

7. The device for forming a groove on an electrode plate according to claim 6, wherein the removal tool comprises any one of a brush, a dust-free cloth, a scraper or an adhesive tape; and the brush, the dust-free cloth, the scraper or the adhesive tape are respectively configured for: removing the thinned active material layer by a brushing method, a scraping method, a wiping method or a sticking method.

8. The device for forming a groove on an electrode plate according to claim 6, wherein the removal tool comprises any one of a brush, a dust-free cloth, a scraper or an adhesive tape; and
the brush, the dust-free cloth, or the scraper are respectively configured for: performing a first removal on the thinned active material layer by a brushing method, a scraping method, or a wiping method; and
the adhesive tape is configured for: performing a second removal on the thinned active material layer by a sticking method.

9. The device for forming a groove on an electrode plate according to any one of claims 6 to 8, wherein after the thinning the active material layer, a value range of a thickness H of the active material layer is: 30 µm ≥ H ≥ 1 µm.

10. The device for forming a groove on an electrode plate according to any one of claims 6 to 8, wherein the method further comprises: a conveyor belt, wherein
the conveyor belt is configured for: moving the electrode plate, to move the active material layer to a thinning processing position; and to move the active material layer from the thinning processing position to a removal position.
